# EUROPÄISCHE PATENTSCHRIFT

(11) **EP 2 022 321 B1**
(45) Veröffentlichungstag und Bekanntmachung des Hinweises auf die Patenterteilung: **27.10.2010**
(21) Anmeldenummer: 08013809.2
(22) Anmeldetag: 01.08.2008
(51) Int. Cl.: A01G 3/06

(54) **Ergonomischer Rasenkantenschneider mit Kreismesser**
Ergonomic lawn verge mower with circular blade
Dispositif de coupe bordures ergonomique doté d'un couteau circulaire

(30) Priorität: 07.08.2007 DE 102007037274
(43) Veröffentlichungstag der Anmeldung: 11.02.2009
(73) Patentinhaber: Bolz, Michael, 48599 Gronau (DE); Bolz, Thomas, 48599 Gronau (DE)
(72) Erfinder: Bolz, Wilhelm Martin, 48599 Gronau (DE)
(74) Vertreter: Isfort, Olaf

(56) Entgegenhaltungen:
- AU-A- 2 184 677
- DE-U1- 20 009 065
- GB-A- 527 791
- GB-A- 943 419
- GB-A- 993 976
- US-A- 2 204 246
- US-A- 2 506 366

## Beschreibung

Die vorliegende Erfindung betrifft einen Rasenkantenschneider mit einem Stiel, welcher sich entlang einer Stielachse erstreckt, mit einen am Stiel befestigten Werkzeugträger, welcher sich entlang einer Werkzeugträgerachse erstreckt, und mit einem im Wesentlichen ebenen Kreismesser zum Schneiden von Rasenkanten, welches auf einer Kreismesserachse drehbar gelagert und senkrecht zu dieser ausgerichtet ist, wobei sich die Kreismesserachse senkrecht zur Werkzeugträgerachse erstreckt.

Bekannt wurde ein Rasenkantenschneider derselben Gattung durch die Gebrauchsmusterschrift DE 200 09 065 U1.

Rasenkantenschneider dienen zum Begradigen von Rasenkanten. Sie schneiden dabei nicht nur die überhängenden Grashalme, sondern die gesamte Grasnarbe. Sie stechen den Rasen im Randbereich praktisch ab.

Aus der DE 10 2005 035 358 A1 ist ein Rasenkantenschneider mit Kreismesser bekannt, welches auf einer ebenen Kufe gelagert ist. Die Kufe trägt dafür Sorge, dass das im Wesentlichen ebene Kreismesser sich stets vertikal erstreckt. Folglich verursacht die Kufe stets einen vertikalen Schnitt. Ein winkelverstellbarer Stiel verbessert die Ergonomie.

Aus der US 1 951 061 ist ein Rasenkantenschneider mit Stiel und Kreismesser bekannt geworden, welches sich um eine zylindrische Ballasttrommel herum erstreckt. Die Ballasttrommel rollt auf dem Boden ab, ihr Eigengewicht lässt das Kreismesser ohne zusätzliche Anpresskraft in den Boden eindringen. Die abrollende Ballasttrommel führt das Kreismesser beidseitig und richtet dieses aufgrund ihrer zylindrischen Form vertikal aus.

Aus der US 4 042 037 ist ein Rasenkantenschneider mit einer im Wesentlichen kreisförmigen, jedoch nicht rotierenden Klinge bekannt geworden, von dessen Stiel eine Fußraste absteht. Da die Klinge nicht drehbar gelagert ist, muss sie beim Abstechen von längeren Rasenkanten mehrfach angesetzt werden. Dies kann zu einer ungeraden Schnittlinie führen.

Die Firma Wolf-Garten GmbH & Co. KG, Industriestraße 83-85, 57518 Betzdorf vertreibt unter der Artikelnummer 3323000 einen Rasenkantenschneider zum Befestigen an einem Stiel, der mit einer um eine Messerachse rotierenden Walze ausgerüstet ist. Die Walze wird in Werbeunterlagen als "konisch" bezeichnet, tatsächlich hat sie aber eher eine ballige Form. Die auf der Rasenfläche abrollende, ballige Walze führt die Messerachse im Wesentlichen horizontal. Ebenfalls auf der Messerachse drehbar gelagert ist ein ebenes Schneidwerkzeug. Dieses ist aber nicht als Kreismesser ausgeführt, sondern stellt eine Ansammlung einer Vielzahl von scherenartiger Klingen dar, die sich radial zur Messerachse erstrecken. Korrespondierend angeordnet zu den rotierenden Klingen sind zwei feststehende Klingen, an denen die rotierenden Klingen vorbeistreichen. Auf diese Weise wird zwischen den rotierenden und stehenden Kingen den eine stetige Scherenschnittfunktion bereit gestellt. Die Scherenschnittfunktion eignet sich nur zum Abschneiden der Grashalme, nicht aber zum Abstechen der Grasnarbe.

Aus der GB 993 976 ist ein Rasenkantenschneider mit einem Stiel und einem damit verbundenen, ein Kreismesser tragenden Werkzeugträger bekannt. Das Kreismesser wirkt mit einem auf der Kreismesserachse drehbar gelagerten Laufkonus zusammen. Mit diesem Rasenkantenschneider wird der Rasen zur Schaffung der Rasenkante im Sinne einer Schere beschnitten.

Aus der US 2 506 366 ist ebenfalls ein Rasenkantenschneider mit einem Steil und einem damit verbundenen, ein Kreismesser tragenden Werkzeugträger bekannt. Das Kreismesser wirkt mit einem den Rasen umgebenden Gehweg abrollenden Laufrad zusammen. Um eine Betätigung des Rasenkantenschneiders vom Gehweg aus zu ermöglichen, ist der Stiel abgewinkelt ausgebildet und somit schräg ausgerichtet, was die Handhabung dieses Rasenkantenschneiders erschwert.

Aus der eingangs genannten DE 200 09 065 U1 wurde ein gattungsgleicher Rasenkantenschneider bekannt, dessen Kreismesserachse senkrecht zur Stielachse verläuft. Zur Benutzung dieses Rasenkantenschneiders wird darauf hingewiesen, dass das Grasmesser entweder senkrecht (gemeint ist: vertikal) zum Boden geführt wird oder notwendigenfalls geringfügig zur Senkrechten neigt.

In der Praxis ist es stets anstrebsam, das Kreismesser unter einer geringfügigen Abweichung zur Vertikalen geneigt zu führen. Dadurch wird der Rasen schräg abgestochen, was einerseits das Nachwachsen verringert und andererseits auch besser aussieht. Das schräge Führen des Kreismessers bedingt jedoch eine entsprechend schräge Ausrichtung des Stiels, was das Aufbringen der erforderlichen Schneidkräfte erschwert und rasch zu Rückenbeschwerden führt.

Im Hinblick auf diesen Stand der Technik liegt der vorliegenden Erfindung die Aufgabe zugrunde, einen Rasenkantenschneider der eingangs genannten Gattung so weiter zu bilden, dass er ergonomischer zu handhaben ist.

Gelöst wird diese Aufgabe dadurch, dass der Werkzeugträger relativ zum Stiel abgekröpft wird, so dass die Werkzeugträgerachse die Stielachse in einem spitzen Winkel schneidet, und dass auf der Kreismesserachse ein Laufkonus drehbar gelagert wird, dessen Konuswinkel doppelt so groß ist wie der genannte spitze Winkel.

Durch die Abkröpfung des Werkzeugträgers im spitzen Winkel relativ zum Stiel wird das Kreismesser bei Stielausrichtung in Vertikalebene in einem Winkel zur Vertikalen geführt, welcher dem Abkröpfwinkel entspricht. Folglich kann mit diesem Anstellwinkel geschnitten werden, ohne den Stiel schräg halten zu müssen. Dies verbessert die Ergonomie erheblich. Darüber hinaus wird das Kreismesser von dem Laufkonus unterstützt, der aufgrund seines besonderen Konuswinkels mit seiner Mantelfläche auf der Grasebene aufliegt. Dies begrenzt einerseits die Einstechtiefe des Messers, so dass der Schnitt stets mit derselben Tiefe durchgeführt wird und ermöglicht andererseits eine vereinfachte Schnittführung. Zwar rollt ein Konus unter kinematisch idealen Bedingungen entlang einer Kreisbahn auf eine Ebene ab, auf dem Rasen herrschen jedoch keine idealen kinematischen Verhältnisse, weswegen das Messer trotz des Konus entlang einer Geraden geführt werden kann.

Ein bevorzugtes Ausführungsbeispiel der Erfindung soll nun näher erläutert werden. Hierfür zeigt:

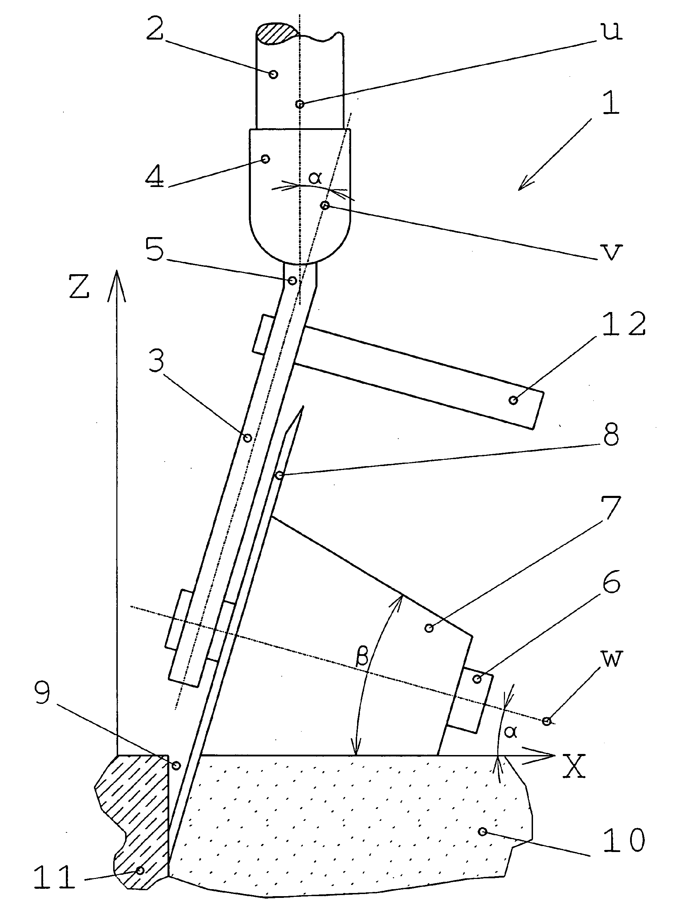

- Fig. 1:: Prinzipskizze Rasenkantenschneider in X/Z-Ebene.

Figur 1 zeigt einen erfindungsgemäßen Rassenkantenschneider 1 in X/Z-Ebene. Letztere ist Teil eines kartesischen Koordinatensystems mit drei senkrecht aufeinander stehenden Koordinatenachsen X, Y und Z. Die X- und die Y-Achse erstrecken sich horizontal, während dessen die Z-Achse vertikal, also in Richtung der Fallbeschleunigung verläuft. Die X/Y-Ebene entspricht daher der Grasoberfläche. In der Zeichnung ist die Y-Achse nicht erkennbar, da sie sich senkrecht zur Papierebene erstreckt.

Der Rasenkantenschneider 1 umfasst einen Stiel 2, welcher sich entlang einer Stielachse u erstreckt. Bei dem Stiel 2 handelt es sich um einen herkömmlichen Spaten-Stiel aus Holz mit einem T-Griff.

Am unteren Ende des Stiels 2 befestigt ist ein stählerner Werkzeugträger 3, eine etwa ebene Platte, die sich entlang einer Werkzeugträgerachse v erstreckt. Zwecks Verbindung mit dem Stiel 2 ist dem Werkzeugträger 3 eine Buchse 4 angeschweißt, in welche der Stiel 2 mit einem Ende eingesteckt ist. Die Buchse 4 ist gegenüber dem übrigen Werkzeugträger 3 durch eine Abkröpfung 5 abgekröpft, so dass sich die Stielachse u und die Werkzeugträgerachse v in einem spitzen Winkel α schneiden. Sofern der Stiel einer Vertikalebene gehalten wird (im Beispiel Stielachse u parallel zur Z-Achse), erstreckt sich die Werkzeugträgerachse 3 in dem spitzen Winkel α zur Vertikalen.

Am distalen Ende des Werkzeugträgers 3 ist ein Bolzen 6 befestigt, der sich entlang einer Kreismesserachse w erstreckt, die orthogonal zur Werkzeugträgerachse v ausgerichtet ist. Auf dem Bolzen 6 drehbar gelagert ist ein Verband bestehend aus einem Laufkonus 7 und einem Kreismesser 8. Der Verband aus Laufkonus 7 und Kreismesser 8 ist um die Kreismesserachse w drehbar. Beide Bauteile 7, 8 müssen nicht zwangsläufig zu einem Verband verbunden sein, sondern können auch getrennt voneinander um die Kreismesserachse w drehbar ausgeführt sein. Selbstverständlich ist es auch denkbar, beide Bauteile 7, 8 fest auf dem Bolzen 6 anzuordnen, und diesen drehbar im Werkzeugträger 3 zu lagern.

Das Kreismesser 8 ist im Wesentlichen eben und senkrecht zur Kreismesserachse w ausgerichtet. Aufgrund der Abkröpfung 5 ist das Kreismesser 8 ebenfalls im Winkel α zur Vertikalen ausgerichtet, so dass es einen keilförmigen Schnitt 9 in der Grasnarbe 10 erzeugt, wenn es entlang eines Kantsteins 11 geführt wird. Der keilförmige Schnitt 9 im Winkel α hat den Vorteil, dass die abgeschnittene Grasnarbe 10 nicht so schnell wieder zuwächst und der Schnitt von oben, also in der X/Y-Ebene, sauberer aussieht. An der Oberkante zwischen Grasnarbe 10 und Kantstein 11 erzeugt der Keilschnitt 9 eine Spaltbreite von etwa 10 bis 15 mm. Im Übrigen verbessert der angestellte Schnittwinkel α die Standzeit des Schneidmessers 8: Das Schneidmesser 8 rollt am Kantstein 11 ab und schleift nicht entlang desselben, wie dies bei vertikaler Ausrichtung des Kreismessers 8 der Fall wäre.

Der Konuswinkel β des Laufkonus 7 entspricht dem doppelten spitzen Winkel α der Abkröpfung 5 bzw. des Keilschnitts 9. Hierdurch wird sichergestellt, dass der Laufkonus 7 mit seinem Mantel auf der Grasnarbe 10 abrollt und dabei die Kreismesserachse w in einem Winkel von α zur X-Achse ausrichtet, so dass die Stielachse u parallel zur Y/Z-Ebene verläuft.

An seinem proximalen Ende, unmittelbar unterhalb der Abkröpfung 5, ist der Werkzeugträger 3 mit einer Fußraste 12 versehen, welche sich im Wesentlichen parallel zur Kreismesserachse w erstreckt. Auf der Fußraste 12 ruht der Fuß des Benutzers des Rasenkantenschneiders 1 und übt die benötigte Anpresskraft, sowie die Vorschubkraft aus. Die Führung des Kreismessers 8 entlang des Kantsteins 11 erfolgt durch Zusammenspiel des in den Händen gehaltenen Stiels 2 und dem auf der Grasnarbe 10 abrollenden Laufkonus 7.

## Patentansprüche

1. Rasenkantenschneider (1), umfassend
a) einen Stiel (2), welcher sich entlang einer Stielachse (u) erstreckt,
b) einen am Stiel (2) befestigten Werkzeugträger (3), welcher sich entlang einer Werkzeugträgerachse (v) erstreckt,
c) und ein im Wesentlichen ebenes Kreismesser (8) zum Schneiden von Rasenkanten, welches auf einer Kreismesserachse (w) drehbar gelagert ist und senkrecht zu dieser ausgerichtet ist,
d) wobei sich die Kreismesserachse (w) senkrecht zur Werkzeugträgerachse (v) erstreckt,
**dadurch gekennzeichnet,**
e) **dass** die Werkzeugträgerachse (v) die Stielachse (u) in einem spitzen Winkel (α) schneidet,
f) und **dass** auf der Kreismesserachse (w) ein Laufkonus (7) drehbar gelagert ist, dessen Konuswinkel (β) doppelt so groß ist, wie der spitze Winkel (α).

## Claims

1. A lawn edge trimmer (1) including
a) a shaft (2) which extends along a shaft axis (u),
b) a tool carrier (3) which is fixed to the shaft (2) and extends along a tool carrier axis (v),
c) and a substantially flat circular blade (8) for cutting lawn edges, which is rotatably mounted on a circular blade axis (w) and is oriented perpendicularly thereto,
d) wherein the circular blade axis (w) extends perpendicularly to the tool carrier axis (v),
**characterised in that**
e) the tool carrier axis (v) intersects the shaft axis (u) at an acute angle (α)
f) and rotatably mounted on the circular blade axis (w) is a runner cone (7) whose cone angle is twice as large as the acute angle (α).

## Revendications

1. Dispositif de coupe bordures (1), comprenant
a) une tige (2) qui s'étend le long d'un axe de tige (u),
b) un porte-outil (3) fixé à la tige (2), qui s'étend le long d'un axe de porte-outil (v),
c) et un couteau circulaire (8) sensiblement plan pour la coupe de bordures de gazon, qui est logé d'une manière tournante sur un axe de couteau circulaire (w) et est orienté perpendiculairement à celui-ci,
d) où l'axe de couteau circulaire (w) s'étend perpendiculairement à l'axe de porte-outil (v),
**caractérisé**
e) **en ce que** l'axe de porte-outil (v) coupe l'axe de tige (u) selon un angle aigu (α),
f) et **en ce qu'**il est logé d'une manière tournante sur l'axe de couteau circulaire (w) un cône de roulement (7) dont l'angle de cône (β) représente le double de l'angle aigu (α).
